# EUROPEAN PATENT APPLICATION

(11) **EP 1 049 273 A2**
(43) Date of publication of application: **02.11.2000**
(21) Application number: 00303266.1
(22) Date of filing: 18.04.2000
(51) Int. Cl.: H04B 10/08, H04B 10/17

(54) **Method and arrangement for controlling optical amplification in a wavelength division multiplex system**

(30) Priority: 26.04.1999 US 299529
(71) Applicant: LUCENT TECHNOLOGIES INC., Murray Hill, New Jersey 07974-0636 (US)
(72) Inventor: Ackerman, David Alan, Hopewell, New Jersey 07724 (US); Berger, Matthias, Tinton Falls, New Jersey 07724 (US); Zhou, Jianhui, Freehold, New Jersey 07728 (US)
(74) Representative: Watts, Christopher Malcolm Kelway, Dr.

(57) **Abstract**

An optical signal source is described for use with an optical amplifier unit which amplifies WDM optical signals. The optical signal source has independently controllable frequency and output power. The optical signal source has a power output that is controlled on a sufficiently fast time scale to compensate for variation of input signals to the amplifier. Additionally, optical frequency is stabilized at a predictable value relative to the optical amplifier characteristics and the WDM optical signal band.

## Description

### Technical Field of the Invention

This invention relates to a wavelength division multiplex (WDM) system and, more particularly, to a method and apparatus for controlling the input signal level to optical amplifiers used in such WDM systems.

### Background of the Invention

Wavelength division multiplexing (WDM) is being introduced as a means of increasing the capacity of optical fiber transmission systems. In a WDM system, each individual fiber carries a number of optical signals having different wavelengths. When these optical signals are transmitted over long distances, periodic regeneration of the optical signals is necessary. Currently, this amplification is effected using optical amplifiers, e.g. Erbium Doped Fiber Amplifiers (EDFA). Optical amplifiers have the advantage of both relatively low cost and the ability to amplify used wavelengths without the need for demultiplexing and optoelectronic regeneration.

The WDM systems currently under development will have thirty or more channels, i.e., modulated optical signals with different wavelengths (known as Dense Wavelength Division Multiplexing, DWDM). These DWDM systems are demanding for optical amplifiers which, especially considering the cascadation of a plurality of optical amplifiers along the transmission path of the DWDM system, have only very limited tolerances in certain parameters. Among these parameters gain flatness and gain tilt are of special importance. Problems with gain characteristics may arise from aging of the DWDM system, from temperature effects, from different attenuation slopes of fiber used to form the transmission path or from stimulated Raman scattering. It is known that desirable gain and other performance characteristics of the optical amplifiers can be optimized by controlling the input power of the optical amplifier.

A conventional means of keeping input signal levels to an optical amplifier constant is by including a variable power pilot signal in the input of a given amplifier. The power level of the pilot is adjusted to compensate for variations in the composite level of signals impinging on the amplifier. For example, if several of the signals incident upon the amplifier suddenly cease (e.g., when signals are dropped at a signal node), the pilot power is increased to maintain a constant input signal level to the amplifier. If these signals suddenly restart (e.g., when signals are added at a signal node), the pilot power is decreased accordingly. The time scale for changes in this illustrative example is around lµs.

Conventionally, the pilot power is provided by a distributed feedback (DFB) semiconductor laser. The optical frequency of the laser is specified to within reasonable tolerances of manufacturing to lie outside the standard signaling band in the system. Conventionally, a guard band in frequency is provided as a buffer between the pilot frequency and the signaling band. Because the amplifier characteristics vary with optical frequency, especially at the edges of usable range of amplification, the amplifier characteristics in the band used for the pilot are often found to vary substantially. This variation, together with the variation in DFB optical frequency make for uncertainty in operation of a DFB laser as a power compensating element with an optical amplifier. Improved performance could be achieved by frequency stabilizing a DFB laser. This would fix the laser at a particular point in the amplifier characteristic and would reduce uncertainty due to the natural variation in DFB frequency as well as the variation of the DFB frequency as its power is caused to vary. The problem with this scheme, as discussed above, is that stabilization of the DFB frequency interferes with its operation as a power compensating element.

What is desired is a optical signal source with independently controllable frequency and output power. An optical signal source with stabilized frequency and controllable power could act as a power compensating element with an optical amplifier. Power output could be controlled on a sufficiently fast time scale to compensate for variation of input signals to the amplifier. Additionally, optical frequency could be stabilized at a predictable value relative to the amplifier characteristics and the signaling band. As such, a device of this nature would provide relief from the uncertainties encountered using conventional means.

### Summary of the Invention

In accordance with the present invention, an optical signal source apparatus and method of operation is described for use with an optical amplifier unit which amplifies WDM optical signals. The optical signal source has independently controllable frequency and output power. The optical signal source has a power output that is controlled on a sufficiently fast time scale to compensate for variation of input signals to the amplifier. Additionally, optical frequency is stabilized at a predictable value relative to the optical amplifier characteristics and the WDM optical signal band.

More particularly, apparatus is disclosed for controlling the optical amplification of a received wavelength division multiplexed (WDM) optical signal including at least one wavelength. The apparatus comprises (1) an optical amplifier for amplifying an input optical signal including a received WDM signal and an amplitude adjusted optical pilot tone signal having a wavelength located outside the wavelength band of the WDM signal; (2) means for generating a wavelength stabilized laser optical signal for use as a pilot tone signal; (3) means for comparing a power level of a signal to be inputted to the optical amplifier with a reference signal and, in response thereto, for generating a control signal; and (4) signal modulator means for receiving the pilot tone signal and responsive to the control signal for generating the amplitude adjusted pilot tone signal, the power level of the amplitude adjusted pilot tone signal being adjusted so that the total power level of the amplitude adjusted pilot tone signal plus the power level of the received WDM signal remains constant independent of the number and amplitude of the at least one wavelength included in the received WDM signal.

In one embodiment, the comparing means compares only the received WDM signal against the reference signal. In another embodiment, comparing means compares a signal which includes the sum of the received WDM signal and the amplitude adjusted optical pilot tone signal against the reference signal. Other embodiments describe arrangements where (1) the wavelength stabilized laser signal generating means and the signal modulator means are part of a monolithically integrated electroabsorption modulated laser (EML), (2) the wavelength stabilized laser signal generating means, wavelength stabilizer, and the signal modulator means are integrated together on a chip, (3) the wavelength stabilized laser signal generating means, wavelength stabilizer, the signal modulator means are part of a hybrid integrated chip, and (4) the signal modulator means is a LINbO₄ device.

### Brief Description of the Drawing

In the drawings,
Fig. 1 shows an illustrative block diagram of a wavelength division multiplexed (WDM) optical transmission system useful in describing the operation of the present invention;
Figs. 2 and 3 show, illustrative WDM signal and pilot tone amplitude characteristics in the signal and pilot tone bands of the system of Fig. 1;
Fig. 4 shows a typical block diagram of an optical amplifier unit of the system;
Fig. 5 shows an illustrative block diagram of an optical amplifier unit of the system, in accordance with the present invention;
Fig. 6 shows an illustrative block diagram of a first embodiment of an optical amplifier of Fig. 5;
Fig. 7 shows an illustrative block diagram of a second embodiment of an optical amplifier of Fig. 5; and
Fig. 8 shows an illustrative block diagram of a third embodiment of an optical amplifier of Fig. 5.

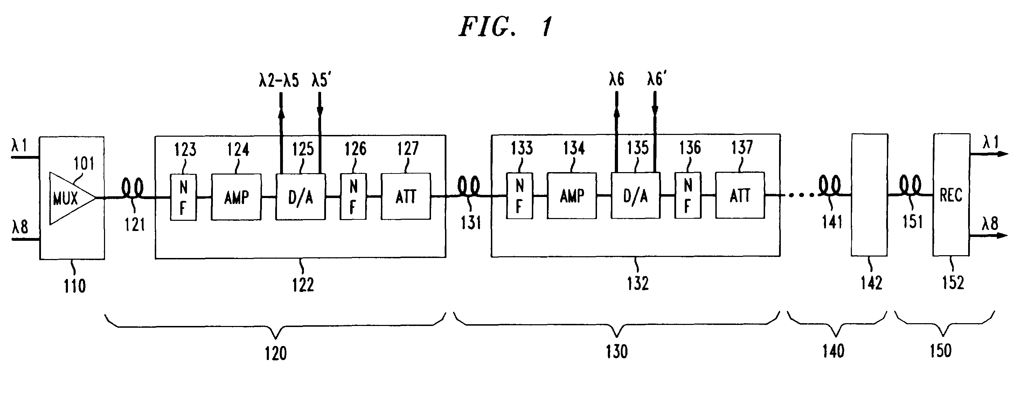

In the following description, identical element designations in different figures represent identical elements. Additionally, in the element designations the first digit refers to the figure in which that element is first located and described (e.g., 110 is located in FIG. 1).

### Detailed Description

Shown in Fig. 1 is an illustrative block diagram of a wavelength division multiplexed (WDM) or dense WDM (DWDM) optical transmission system useful in describing the operation of the present invention. The WDM system shown in Fig.1 is uni-directional, a bi-directional system would, typically, be implemented by duplicating the system of Fig. 1 in the other direction. The system includes a transmitter node or unit 110, a plurality of optical links 120, 130,... 140, and a receiver link 150 including the receiver node or unit 152. The transmitter unit 110 includes a multiplexer 101 which multiplexes together the modulated optical wavelength signals λ1 - λ8 into a WDM signal. The resulting WDM signal is sent over the optical fiber 121 of link 120. Each of the optical links, e.g., 120, include a length of optical fiber, i.e., 121, and wavelength add/drop node, i.e., 122. Each of the optical links 120 -140 is designed to have essentially zero gain, that is, the gain in the wavelength add/drop node is set to compensate for the optical signal loss of the preceding optical fiber in the link. At the receiver location 152, the received WDM signal from optical fiber 151 is amplified and demultiplexed into the individual wavelengths signals λ1 - λ8.

Each of the wavelength add/drop nodes 122 -142 are similarly implemented. Illustratively, the wavelength add/drop node 122 is shown to include a notch filter 123 , an optical amplifier unit 124, an add/drop network 125, a notch filter 126 , and an attenuator unit 127. The WDM signal is received over fiber 121 and filtered by notch filter 123 to pass the WDM signal band and eliminate other signals falling outside the WDM signal band. The optical amplifier unit 124 amplifies the WDM signal and add/drop network 125 is shown, illustratively, to drop the wavelengths λ2 - λ5 and add a new wavelength λ5'. The signal is then filtered by notch filter 126 to pass the WDM signal band and eliminate the pilot tone signal and other signals falling outside the WDM signal band. The attenuator unit 127 is used to equalize the link loss to the link gain in each link and set the desired level of the newly configured WDM signal (i.e., λ1, λ5' λ6 - λ8) transmitted from node 120 over fiber 131. Controlling the level of transmitted new WDM signal sent over fiber 131 helps to maintain the desired system transmission performance characteristics over the next optical fiber segment 131 of link 130.

The new WDM signal is received over fiber 131 by wavelength add/drop node 132. The add/drop node 132 is shown, illustratively, to include a notch filter 133 , an optical amplifier unit 134, an add/drop network 135, a notch filter 136 and an attenuator unit 137. The add/drop node 132, as well as the other add/drop nodes of the system, each operate in the manner previously described for add/drop node 122, except that different wavelengths may be dropped or added at these different node locations.

The add/drop network elements, e.g., 125, 135, may be implemented using devices of the type described in the article by C. Dragone, C. A. Edwards and R. C. Kisler, "Integration Optics *NXN* Multiplexer on Silicon", IEEE Photonics Tech. Letters, vol.3, no.10, pp. 896-899, Oct 1991, which is incorporated by reference herein. The add/drop network elements may also be of the type described in the copending patent application of C. R. Giles et al, entitled "ADD/DROP OPTICAL CIRCUIT FOR A WAVELENGTH-DIVISION MULTIPLEXED NETWORK", filed October 15, 1996, Serial No. 08/730,282, which is also incorporated by reference herein.

As previously noted, these WDM (or DWDM) systems are demanding for optical amplifier units 124, 134, which, especially considering the cascadation of a plurality of optical amplifier units along the transmission path of the WDM system, have only very limited tolerances in certain parameters. These parameters become more critical when the number of wavelengths used in a system is increased, as is the case for DWDM systems. Among these parameters gain flatness and gain tilt are of special importance. Problems with gain characteristics may arise from aging of the DWDM system, from temperature effects, from different attenuation slopes of fiber used to form the transmission path or from stimulated Raman scattering. It is known that desirable gain and other performance characteristics of the optical amplifiers can be optimized by controlling the input power to the optical amplifier units.

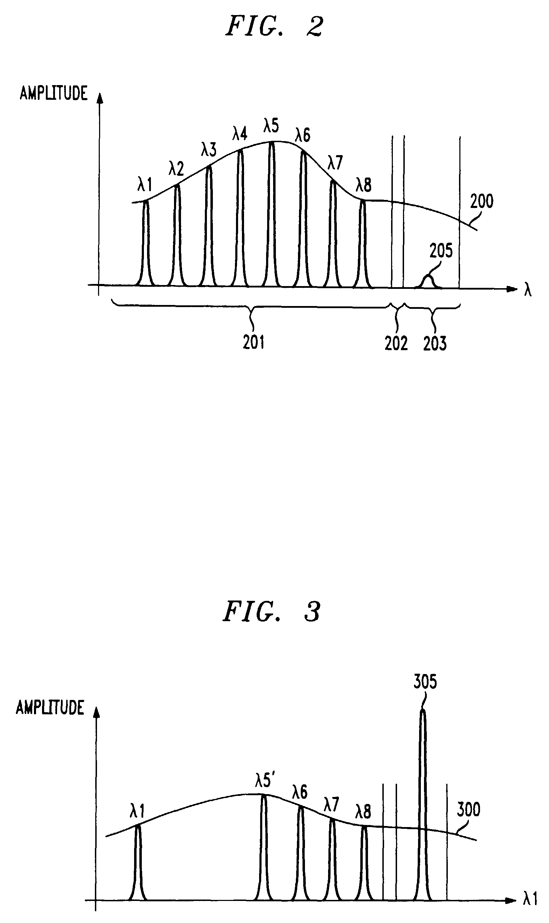

A conventional means of keeping input signal levels to an optical amplifier unit constant is by including a variable power pilot signal as part of the input of to the amplifier. Fig. 2 shows, illustratively, the signal amplitude characteristics 200 of a received WDM signal band 201, guard band 202, and the pilot tone band 203 at the add/drop node 120. As shown, because of the differences in the transmission loss characteristics of the system with wavelength, the wavelengths λ1 - λ8 in band 201 are received at different levels at add/drop node 120. The pilot tone band 203 is the band in which the laser pilot signal, or pilot tone, is located. The guard band is used to provide a wavelength separation or buffer between the pilot tone wavelength and the WDM signaling band. The passband roll-off region of the notch filter 123 occurs in the guard band which enables the notch filter 123 to isolate the WDM signal band 201 from the pilot band 203.

The power level of the pilot tone 205 is adjusted to compensate for variations in the composite level of signals impinging on the amplifier. In Fig. 2, for example, when all the wavelength λ1 - λ8 in band 201 are present at the input to amplifier 134 in our Fig.1 example, the level of the pilot tone 205 is very low. If several of the signals incident upon amplifier 134 suddenly cease the pilot tone is increased to maintain a constant input signal level to the amplifier. This is shown illustratively in Fig. 3, for our Fig. 1 system, where wavelengths λ2 - λ4 are dropped at signal node 120 and the pilot power into amplifier 134 is increased to compensate for the loss in power due to the dropping of wavelengths λ2 - λ4. In this manner, a constant input signal level (intensity) to amplifier 134 is maintained. Thus, the range of the power (amplitude) of the pilot tone may vary from about zero (when all 8 wavelengths are used, see 205 of Fig. 2) to about eight times the power(amplitude) of a typical wavelength channel (if no wavelength channels are used, not shown). Thus, the power to the amplifier 134 is maintained constant and equals the WDM signal channel power plus the pilot tone power. As an example, if the power level of each wavelength channel is about 1 mw and the pilot tone power is about 0mw, then the pilot tone power is increased 1mw for each wavelength channel that is not present at the amplifier. Moreover, the pilot power needs to decrease/increase at a rate sufficient to track the rate at which wavelength channels are added/dropped. Changes in the input power occur when channel(s) are added or dropped intentionally or in cases of a partial system failure or a cable cut. Since a characteristic time constant for an amplifier may be, illustratively, microseconds, the response time for the change in power level of the pilot tone should be on the order of 1µs.

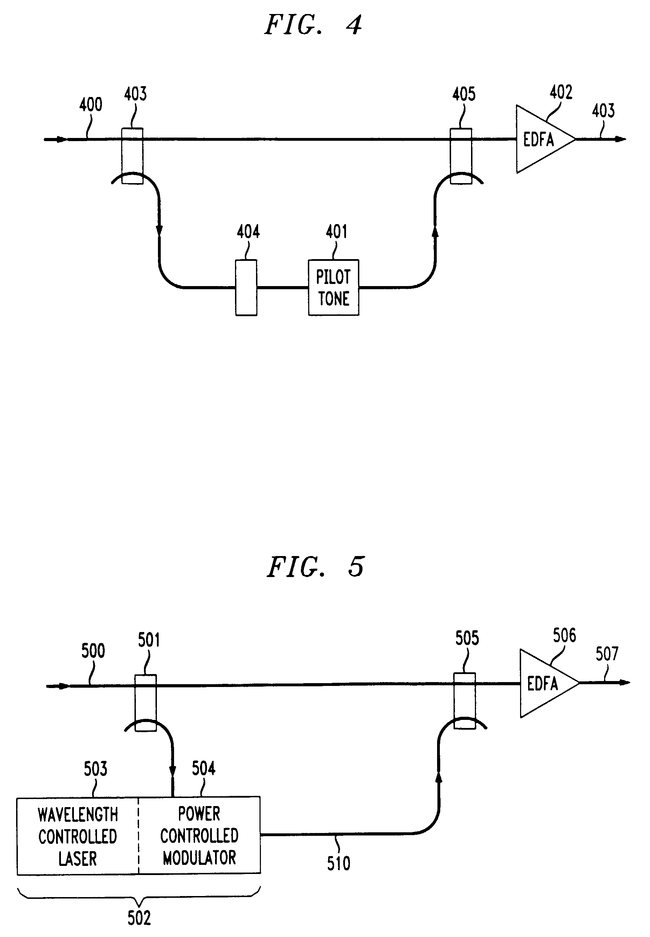

Fig. 4 shows a typical block diagram of an optical amplifier unit (e.g., 124, 134) of the system of Fig.1. Conventionally, the pilot tone 401 is provided by a distributed feedback (DFB) semiconductor laser and the amplifier 403 is an Erbium doped fiber amplifier (EDFA). The coupler 403 is used to obtain a WDM signal and coupler 405 is used to couple the laser 401 signal to the amplifier 403. The control circuit 404 controls the level of the DFB laser 401. The optical frequency of the DFB laser 401 is specified to within reasonable tolerances of manufacturing to lie outside the standard WDM signaling band (i.e., 201 of Fig.1) of the system. One illustrative type of DFB laser that can be utilized is described in the article entitled "Growth and Characterization of High Yield, Reliable, High-Power, High-Speed, InP/InGaAsP Capped Mesa Buried Heterostructure Distributed Feedback (CMBH-DFB) Lasers," IEEE J. Quantum Electron., 25, no. 10, pp. 2091-2095, Oct, 1989.

Because the optical amplifier 403 characteristics vary with optical frequency, especially at the edges of usable range of amplification, the amplifier's gain characteristics in the band 203 used for the pilot tone 401 are often found to vary substantially. This gain variation, together with the variation in DFB laser 401 optical frequency make for uncertainty in operation of a DFB laser 401 as a power compensating element for optical amplifier 402. Improved performance could be achieved by frequency stabilizing the DFB laser 401. This would fix the laser at a particular wavelength in the amplifier characteristic and would reduce uncertainty due to the natural variation in DFB frequency as well as the variation of the DFB frequency as its power is caused to vary. The problem with this scheme, as discussed below, is that stabilization of the DFB frequency interferes with its operation as a power compensating element.

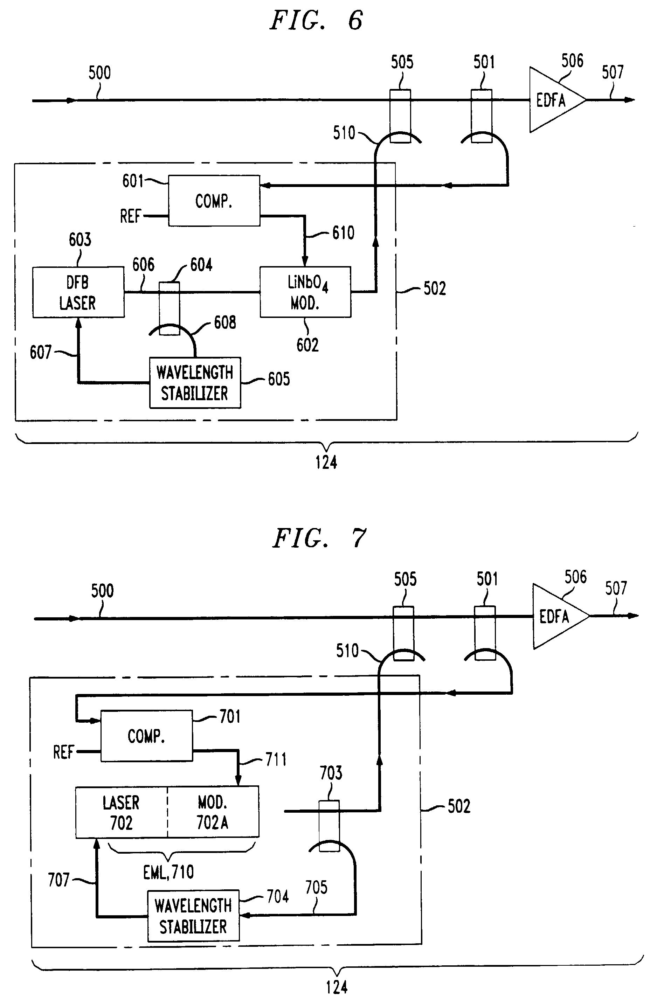

Frequency stabilized pilot sources 401 typically consist of an optical laser source and a means for stabilizing the optical frequency. In the simplest case, frequency stability is ensured by maintaining the laser device at a constant temperature. For more exacting frequency stabilization, a frequency discriminator is employed in a closed feedback loop. With reference to Fig. 6, one illustrative frequency stabilized pilot tone arrangement is shown to include a laser 603 controlled by a feedback signal from a wavelength stabilizer 605 (including a frequency discriminator). The discriminator 605 converts some portion of the optical output signal 606 into a signal 607 proportional to deviation in optical frequency from a desired frequency. In a closed loop laser frequency stabilization scheme, the signal from the frequency discriminator is fed back to the laser 603 in such a way as to correct the error in optical frequency. Correction can be accomplished by changing any parameter of the laser which will, in turn, change the optical frequency in a predictable and repeatable manner. As an example, if the optical source is a DFB semiconductor laser, the temperature of the laser will affect the optical frequency. Similarly, the drive current will affect the optical frequency. Therefore, a semiconductor laser, operating under closed loop frequency stabilization control would have some portion of its output sampled by a discriminator, the discriminator output is conditioned and used to control and correct either the laser temperature, via a thermal element, or the laser bias current. This technology has been demonstrated in the literature. Discriminators such as would be used in these systems are commercially available, for example, see U. S. Patent 5,691,989, issued on Nov. 25, 1997and entitled "WAVELENGTH STABILIZED LASER SOURCES USING FEEDBACK FROM VOLUME HOLOGRAMS."

Undesirably, one feature of the system described above which comprises a DFB semiconductor laser is that control of either temperature or drive current affects not only the optical frequency but also the laser output power. The use of closed loop feedback to fix the optical frequency via control of laser temperature or bias current makes it difficult to independently control the laser output power. As an example, consider a DFB semiconductor laser with frequency stabilization via laser drive current. If the laser output power is changed form P1 to P2 by changing the laser drive current, the optical frequency changes due to the combined effect of a change of carrier density on a short time scale and a change of laser temperature due to Joule heating on a longer time scale. Changes of optical frequency are registered by the discriminator and subsequently cause changes in drive current to correct the frequency deviation, thereby changing the optical power away from P2. In effect, the closed loop interferes with the power control. Similar interference would be experienced in the case of a semiconductor laser under closed loop stabilization via temperature control.

As we have discussed above, the optical amplifiers 124 and 134 of Fig. 1 require a constant input power to ensure that amplifier characteristics are maintained constant with changing power levels of input WDM signal levels. This requires that the laser pilot tone be changed quickly and accurately on a rapid time scale to match the quickly changing addition or deletion of wavelength channels at a system add/drop node. In these cases, the interference of a frequency stabilization control loop discussed above is undesirable. What is needed is an optical source with an extra degree of freedom which would afford independent control of both the optical frequency and output power.

Fig. 5 shows, in accordance with the present invention, an illustrative block diagram of an optical amplifier unit (e.g., 124, 134) of the system of Fig. 1 having both independent optical frequency and output power control. The amplifier unit includes a coupler 501 for tapping a portion of the incoming WDM signal 500 which is fed into the power control circuit 504. The optical pilot tone source 502 includes a DFB (distributed feedback ) laser 503 with an independent wavelength control and a power control circuit 504 with an independently controlled pilot tone output signal 510. A coupler 505 couples the pilot tone output signal 510 to optical amplifier 506 .

The pilot tone source 502 needs to satisfy two criteria (1) wavelength stability and (2) output power variability. Wavelength stability is needed so that as little bandwidth 203 as possible is utilized thereby optimizing the bandwidth 201 available for the WDM signal. Output signal power 510 variations from the pilot tone source 502 should be on the order of approximately one microsecond to compensate for measured variations in the incoming WDM signal 500 power so as to maintain a constant power level to the optical amplifier 506.

The optical pilot tone unit 502, illustratively, may be either implemented using either a monolithically integrated or hybrid integrated optical source 503 and optical modulator 504. The optical source 503 provides a wavelength controlled optical carrier wave (CW) output signal to the modulator 504 which, in turn, attenuates the signal to the desired level. Examples of such optical sources 503 are the monolithically integrated electroabsorption modulated laser (EML) and the hybrid integrated semiconductor laser with LiNbO₄ modulator. In one embodiment, the monolithically integrated EML may be of the type described in U. S. Patent 5,548,607, issued on June 8, 1997 and entitled "ARTICLE COMPRISING AN INTEGRATED LASER/MODULATOR COMBINATION." In the hybrid embodiment, the laser may be the type described in the previously-identified U. S. Patent 5,691,989 and the LiNbO₄ modulator may be of the type described in U. S. Patent 4,157,860, issued on Oct. 11, 1980 and entitled "DUAL POLARIZATION ELECTROMAGNETIC SWITCH AND MODULATOR."

It should be noted that in Fig. 5, the modulator 504 is shown to monitor the power level of the incoming WDM signal 500 and to determine therefrom the power level of the pilot tone signal 510 to be added to the WDM signal 500 so as to maintain a constant power into amplifier 506. It should be noted that the arrangement of Fig. 5 could instead be implemented so that the coupler 501 monitors the signal power level into the amplifier 506 (i.e., the sum of the pilot signal 510 and the WDM signal 500) and therefrom determine how to adjust the power level of the pilot signal 510. Such an arrangement (i.e., with coupler 501 located after coupler 505) is utilized in the embodiments shown in Figs. 6 through 8. Additionally, the coupler 501 of embodiments of Figs. 6 - 8 could also be arranged like Fig. 5, (that is, coupler 501 in front of coupler 505) to monitor the power level of the incoming WDM signal 500 and to determine therefrom the power level of the pilot tone signal 510 to be added to the WDM signal 500.

Shown in Fig. 6 - 8 are illustrative block diagrams of embodiments of an optical amplifier unit (124 of Fig. 1) incorporating pilot tone sources that satisfy our requirements. As shown in Fig. 6, a pilot tone source 502 is shown to include a comparator circuit 601, a Lithium Niobate modulator (LINbO₄) modulator 602, a DFB laser 603, a coupler 604, and a wavelength stabilizer 605. The coupler 604 taps a portion of the pilot tone signal 606 from the DFB laser 603 for use as a feedback signal to the wavelength stabilizer 605. In response to the feedback signal, wavelength stabilizer 605 generates a wavelength correction signal 607 which is used to adjust the wavelength of the pilot tone signal 606 outputted from the DFB laser 603. The pilot tone signal 606 is provided as an input to modulator 602. The comparator 601 compares the level of the signal outputted from coupler 501 to a reference signal REF. The signal from coupler 501 includes the received WDM signal 500 plus the pilot signal 510 from modulator 602. In response to the signal from the coupler 501, the comparator 601 generates a control signal 610 which controls the output pilot tone level 510 from modulator 602. The coupler 505 couples the pilot tone signal 510 to optical amplifier 506.

Shown in Fig. 7 is another embodiment of an optical amplifier unit 124 incorporating a pilot tone source 502 that satisfy our requirements. In this embodiment, the optical source 502 could include an EML 710 ( a laser 702 integrated with a modulator 702a), coupler 703 and wavelength stabilizer 704. The coupler 703 taps a portion of the pilot tone signal 510 from the modulator 702A for use as a feedback signal 705 to the wavelength stabilizer 704. In response to the feedback signal 705, wavelength stabilizer 704 generates a wavelength correction signal 707 which is used to adjust the wavelength of laser 702 of EML 710. The comparator 701 compares the level of the signal outputted from coupler 501 to a reference signal REF. The signal from the coupler 501 includes the received WDM signal 500 plus the pilot signal 510 from modulator 602. In response to the signal from the coupler 501, the comparator 601 generates a control signal 711 which controls the output pilot tone level 510 from modulator 702A. The coupler 505 couples the pilot tone signal 510 to optical amplifier 506.

In an alternate embodiment, the wavelength stabilizer or frequency discriminator 704 may receive a pilot tone 705 from an output facet distant from the modulator 702A or output facet of the EML device 702. The wavelength stabilizer 704 could be of a standard type which is fit into the EML 710 package. Control of the wavelength could be via control of the temperature of the laser 702 portion of EML 701. Once controlled, the temperature and current to the laser 702 portion of EML 710 would be constant except for modest and slow changes to keep the optical frequency fixed. The output power of EML 710 could be controlled by varying the feedback voltage 711 to the modulator 702A section. The power could be varied from a maximum approximately equal to that emitted into the modulator 702A from the CW laser 702 to a minimum equal to the maximum times the extinction ratio of the modulator 702A. The modulator 702A is capable of attenuating signals by a significant factor on a microsecond time scale.

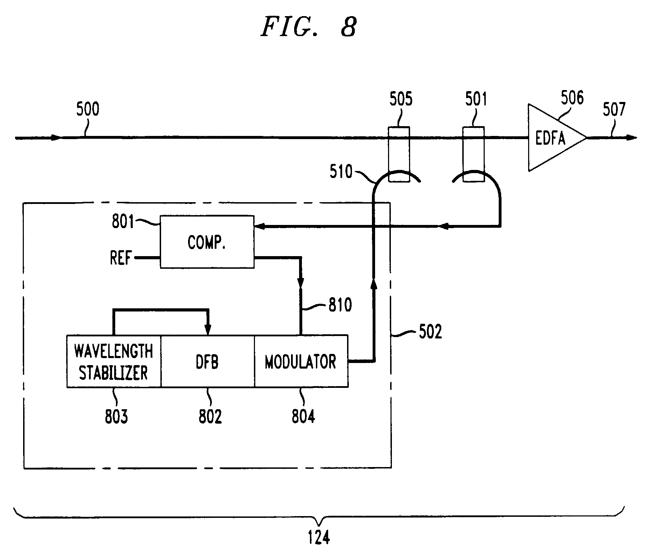

Shown in Fig. 8 is yet another embodiment of an optical amplifier unit 124 including an optical source 502 incorporating a hybrid integrated DFB laser 802, stabilizer 803, and modulator 804. The comparator 801 compares the level of the signal outputted from coupler 501 to a reference signal REF. The signal from the coupler 501 includes the received WDM signal 500 plus the pilot signal 510 from modulator 804. In response to the signal from the coupler 501, the comparator 801 generates a control signal 810 which controls the output pilot tone level 510 from modulator 804. The coupler 505 then couples the pilot tone signal 510 to optical amplifier 506.

## Claims

1. Apparatus for controlling the optical amplification of a received wavelength division multiplexed (WDM) optical signal including at least one wavelength, the apparatus comprising
an optical amplifier for amplifying an input optical signal including a received WDM signal and an amplitude adjusted optical pilot tone signal having a wavelength located outside the wavelength band of the WDM signal;
means for generating a wavelength stabilized laser optical signal for use as a pilot tone signal;
means for comparing a power level of a signal to be inputted to the optical amplifier with a reference signal and, in response thereto, for generating a control signal; and
signal modulator means for receiving the pilot tone signal and responsive to the control signal for generating the amplitude adjusted pilot tone signal, the power level of the amplitude adjusted pilot tone signal being adjusted so that the total power level of the amplitude adjusted pilot tone signal plus the power level of the received WDM signal remains constant independent of the number and amplitude of the at least one wavelength included in the received WDM signal.

2. The Apparatus of claim 1 wherein the signal to be inputted to the optical amplifier includes only the received WDM signal.

3. The Apparatus of claim 1 wherein the signal to be inputted to the optical amplifier includes the sum of the received WDM signal and the amplitude adjusted optical pilot tone signal.

4. The Apparatus of claim 1 wherein the wavelength stabilized laser signal generating means includes a laser source and a wavelength stabilizer for maintaining the frequency of the laser source constant.

5. The apparatus of claim 4 wherein the laser source and the wavelength stabilizer are integrated together on a chip.

6. The apparatus of claim 1 wherein the wavelength stabilized laser signal generating means and the signal modulator means are part of a monolithically integrated electroabsorption modulated laser (EML).

7. The apparatus of claim 1 wherein the wavelength stabilized laser signal generating means, wavelength stabilizer, and the signal modulator means are integrated together on a chip.

8. The apparatus of claim 1 wherein the wavelength stabilized laser signal generating means, wavelength stabilizer, and the signal modulator means are part of a hybrid integrated chip.

9. The apparatus of claim 1 wherein the signal modulator means is a LINbO₄ device.

10. A method of controlling the optical amplification of a received wavelength division multiplexed (WDM) optical signal including at least one wavelength, comprising the steps of:
generating a wavelength stabilized laser optical signal for use as a pilot tone signal;
comparing a power level of a signal to be amplified in the amplifying step with a reference signal and, in response thereto, for generating a control signal;
receiving the pilot tone signal and in response thereto generating the amplitude adjusted pilot tone signal, the power level of the amplitude adjusted pilot tone signal being adjusted so that the total power level of the amplitude adjusted pilot tone signal plus the power level of the received WDM signal remains constant independent of the number and amplitude of the at least one wavelength included in the received WDM signal; and
optically amplifying the received WDM signal and the amplitude adjusted optical pilot tone signal.
